# EUROPÄISCHE PATENTANMELDUNG

(11) **EP 3 531 541 A1**
(43) Veröffentlichungstag der Anmeldung: **28.08.2019**
(21) Anmeldenummer: 18157806.3
(22) Anmeldetag: 21.02.2018
(51) Int. Cl.: H02K 15/04, H01F 41/061, H02K 15/06

(54) **WELLENWICKELVORRICHTUNG UND VERFAHREN ZUM HERSTELLEN EINER WELLENWICKLUNG**

(71) Anmelder: Aumann Espelkamp GmbH, 32339 Espelkamp (DE)
(72) Erfinder: LÜTTGE, Wolfgang, 31787 Hameln (DE)
(74) Vertreter: Schober, Mirko

(57) **Zusammenfassung**

Eine Wellenwickelvorrichtung weist eine Drahtauslassdüsenanordnung (1) auf, durch welche ein Wickeldraht (2) oder eine Mehrzahl Wickeldrähte (2) zugeführt wird. Sie weist ferner einen relativ zur Drahtauslassdüsenanordnung (1) wenigstens drehbar verlagerbaren Formkern (4) auf, auf welchen der Wickeldraht (2) oder die Wickeldrähte (2) aufwickelbar sind. Die Wellenwickelvorrichtung weist weiter eine dem Wickeldraht (2) zustellbare Biegehilfe (3, 3a) auf, die dazu ausgelegt ist, einen Abschnitt (2a) eines aus der Drahtauslassdüsenanordnung (1) zugeführten Wickeldrahtes (2) vor der Ablage des Abschnitts (2a) auf dem Formkern (4) umzubiegen.

## Beschreibung

Die Erfindung betrifft eine Wellenwickelvorrichtung nach dem Oberbegriff des Anspruchs 1 und ein Verfahren zum Herstellen einer Wellenwicklung nach dem Oberbegriff des Anspruchs 5.

Zum Bewickeln von Stator- bzw. Rotorkernen wird unter anderem die Wellenwicklung eingesetzt. Eine oder eine Mehrzahl wellenförmige Wicklungen werden, wie es beispielsweise in DE 199 22 794 B4, DE 10 2004 035 084 A1 oder DE 10 2008 021 779 A1 offenbart ist, zu einer Wickelmatte ausgebildet. Dabei wird/werden der Draht oder die Drähte um einen Formkern gewickelt und in die gewünschte Form gebracht. Diese Wickelmatten werden in einem nachfolgenden Schritt in die entsprechenden Nuten des Stators bzw. Rotors eingelegt. Die Querschnitte der gewickelten Leitungen sind in der Regel rund oder rechteckig.

Ein zentraler Punkt bei der Ausbildung solcher Wellenwicklungen ist die Ausbildung der Wickelköpfe. Diese müssen in der Wickelmatte so ausgebildet sein, dass sich beim Einbringen in Nuten eines Stators oder Rotors, wobei die Wickelmatte letztlich aufgerollt wird, die Wickelköpfe nicht gegenseitig behindern oder eine technisch nachteilige Form oder Lage einnehmen. Deshalb spielt die Biegung des Drahtes beim Herstellen der Wellenwicklung eine große Rolle. DE 600 18 369 T2 offenbart, eine Materialschwächung beim Biegen dadurch zu verringern, dass der Draht an der Biegestelle in sich verdreht wird. Der damit verbundene Nachteil ist ein größerer Raumbedarf der Biegestelle.

Es hat sich allerdings als vorteilhaft erwiesen, auch Leitungsstränge zu wickeln, die einen rechteckigen Querschnitt aufweisen. Hierbei erfolgt, wie die DE 10 2008 019 479 A9 offenbart, die Biegung über die Breitseite bei gleichzeitiger Drehung des Drahtes um 180°, da der Draht beim Biegen des flachen Drahtes über die Schmalseite durch Verdrehen ausweichen würde. Eine solche Biegung nimmt ein gewisses Volumen ein, weil die Breitseite sich ebenfalls um 180° dreht. Durch den Raumbedarf ist es schwierig, gerade bei einer kompakten Bauweise, benachbarte Biegungen auf dem Umfang eines Stators anzuordnen. Es muss mit Versatz und damit höherem Raumbedarf gearbeitet werden.

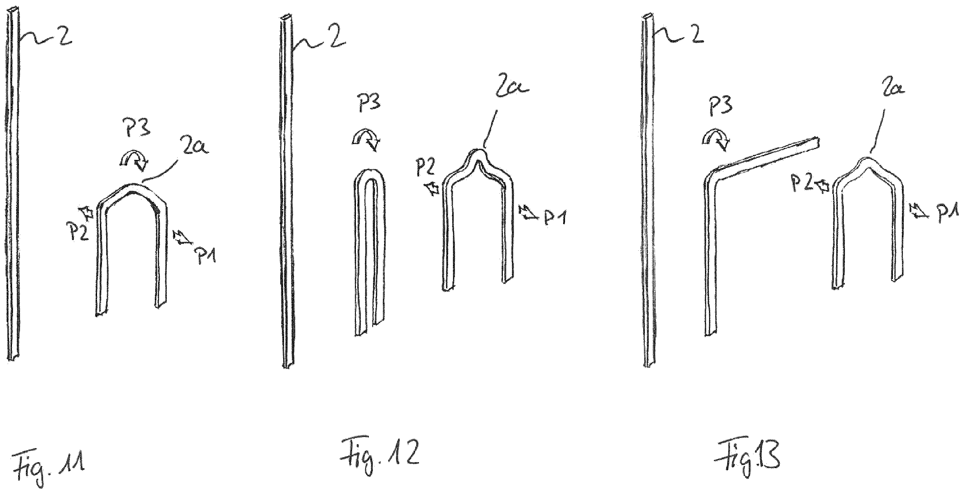

Beim Erstellen einer Wellenwicklung nach dem herkömmlichen Verfahren (Figur 11) werden Drähte 2 um einen Formkern gewickelt. Dabei findet ein einstufiger Umformprozess mit gleichzeitigem Biegen (Pfeil P3) und Schränken (Pfeile P1 und P2) im Bereich des Wickelkopfes 2a statt. Es entsteht ein flacher, dreieckiger Wickelkopf 2a. Solch eine Lösung kann unter Umständen ebenfalls relativ viel Raum beanspruchen.

Raumsparender ist die Lösung, die in DE 10 2014 110 377 A1 offenbart ist. Bei dieser sog. Hairpin-Technik werden die Wicklungen nicht als Matte produziert, sondern einzelne Windungen werden so angeordnet, dass die zusammengehörigen Enden nebeneinander zu liegen kommen und anschließend miteinander verbunden werden. Ein Wickelkopf, der mittels Hairpintechnik (vgl. Fig. 12) hergestellt wird, ist nicht wie oben flach ausgebildet, sondern schraubenförmig ausgeformt. Ein solcher Wickelkopf erweist sich im Produkt als kompakt und vorteilhaft in Bezug auf die Windungssprünge, insbesondere bei der Verwendung von Hochkant-Flachdrähten. Diese Form entsteht aufgrund eines zweistufigen Umformprozesses. Der gerade Draht 2 wird zuerst U-förmig gebogen (P3) und anschließend, d.h. zeitlich nachgelagert, geschränkt (P1 und P2). Beim Biegen entsteht eine Kaltverfestigung, die dem Wickelkopf beim anschließenden Schränken die besondere schraubenförmige Drahtform verleiht. Eine derartige Anordnung ist zwar in Umfangrichtung des Stators bzw. Rotors raumsparend, doch ist dieses Herstellungsverfahren mit einem erheblichen Arbeitsaufwand bei der Herstellung der Verbindungen verbunden.

Aufgabe der Erfindung ist, eine Wickelvorrichtung und ein Verfahren zum Herstellen einer Wellenwicklung bereitzustellen, welche ein kostengünstiges und raumsparendes Biegen, insbesondere eines flachen Drahtes, ermöglichen.

Gelöst wird diese Aufgabe durch eine Wickelvorrichtung mit den Merkmalen des Anspruchs 1 und ein Verfahren zum Herstellen einer Wellenwicklung mit den Merkmalen des Anspruchs 5.

Gegenstand der Erfindung ist eine Wellenwickelvorrichtung mit einer Drahtauslassdüsenanordnung, durch welche ein Wickeldraht oder eine Mehrzahl Wickeldrähte zugeführt werden, und einem relativ zur Drahtauslassdüsenanordnung wenigstens drehbar verlagerbaren Formkern, auf welchen der Wickeldraht oder die Wickeldrähte aufwickelbar sind, wobei die Wellenwickelvorrichtung weiter eine dem Wickeldraht zustellbare Biegehilfe aufweist, die dazu ausgelegt ist, einen Abschnitt eines aus der Drahtauslassdüsenanordnung zugeführten Wickeldrahtes vor der Ablage des Abschnitts auf dem Formkern umzubiegen. Diese Biegehilfe dient als Führung des Drahtes beim Biegen und verhindert, dass sich der Draht beim Biegen verdreht, gerade wenn er über die Schmalseite gebogen wird. Somit kann der flache Draht bei einem Wellenwickel raumsparend über die Schmalseite gewickelt werden, ohne dass im Nachgang noch Verbindungen von Drahtabschnitten erstellt werden müssen. Mit einer erfindungsgemäßen Wellenwickelvorrichtung ist es möglich, Formdrähte zum Fertigformen auf einem Formkern vorbereitend, also vor der Ablage auf dem Formkern, umzuformen.

Nach einer vorteilhaften Ausführungsform der vorliegenden Erfindung weist die Biegehilfe eine kammartige Form auf. Die kammartige Form ermöglicht es, den Draht jeweils zwischen zwei Zinken oder Vorsprüngen des Kamms aufzunehmen und so mehrere Drähte gleichzeitig zu biegen, wodurch sich auch mehrere Drähte gleichzeitig verarbeiten lassen.

Bei einer besonders vorteilhaften Ausführungsform ist der Wickeldraht ein Flachdraht und die kammartige Form der Biegehilfe weist Zwischenräume auf, deren Breite so bemessen ist, dass sie größer als die Schmalseiten des Flachdrahtes aber kleiner als die Breitseite des Flachdrahtes ist. Ein Flachdraht kann so leicht mit der Schmalseite in den Zwischenraum des Kamms eingeführt werden, wobei der schmal bemessene Zwischenraum zwischen den Zinken bzw. Vorsprüngen verhindert, dass sich der Draht beim Biegen verdrehen kann. Gerade bei Flachdrähten, die über die Schmalseite gebogen werden sollen, treten Torsionskräfte auf, da der Draht damit einer größeren Materialdehnung ausweichen will.

Nach einer ganz besonders bevorzugten Ausführungsform ist die Biegehilfe in einer Richtung parallel zur Zuführrichtung des Wickeldrahtes zustellbar. Da die Biegehilfe immer nur dann benötigt wird, wenn die Biegung des Drahtes einen Mindestwinkel überschreitet, ist es vorteilhaft, wenn die Biegehilfe nur beim Überschreiten des Mindestwinkels zugestellt wird. Dadurch kann die Drahtauslassdüsenanordnung sehr eng an dem Formkern geführt und so die Wickelgenauigkeit erhöht werden.

Die Erfindung betrifft ferner auch ein Verfahren zum Herstellen einer Wellenwicklung, bei welchem ein Wickeldraht oder eine Mehrzahl Wickeldrähte von einer Drahtauslassdüsenanordnung einem Formkern zugeführt und durch Drehen des Formkerns auf diesen aufgewickelt werden, wobei
i) der zugeführte Wickeldraht auf dem Formkern abgelegt und an diesem festgehalten wird,
ii) der Formkern dann um 180° gedreht wird,
wobei zwischen dem Schritt i) und dem Schritt ii) in einem Schritt ia) eine Biegehilfe dem zugeführten Wickeldraht zugestellt wird, so dass der Wickeldraht durch die Biegehilfe, insbesondere in einer Hochkantposition, gehalten wird.

Durch die Biegung an der Biegehilfe wird der Wickeldraht gebogen, bevor er auf dem Formkern abgelegt wird.

Ist der Wickeldraht als Flachdraht ausgeführt, so kann dieser durch die Biegehilfe in einer Hochkantposition gehalten werden. Durch das Hinzustellen der Biegehilfe wird der Draht so gehalten, dass er beim Biegen über die Schmalseite nicht ausweichen kann, indem er sich verdreht. Nach dem Biegen über die Biegehilfe wird der Wickeldraht durch das Drehen des Formkerns auf diesen abgelegt.

In einem bevorzugten Verfahren wird während des Schritts ii), insbesondere etwa nach einer 90°-Drehung des Formkerns, in einem Schritt iia) die Biegehilfe aus dem Eingriff mit dem Wickeldraht zurückgezogen. Ist der Biegevorgang so weit vorangeschritten, dass die Ausweichbewegung des Drahtes bei weiterem Biegen vernachlässigbar ist, wird die Biegehilfe wieder zurückgezogen, damit die Drahtauslassdüsenanordnung wieder nahe an dem Formkern geführt werden kann.

In einem besonders bevorzugten Verfahren werden die Schritte i) und ii), insbesondere i), ia), ii), iia) wiederholt ausgeführt. In einem kontinuierlichen Prozess kann so die Wellenwicklung erstellt werden, wobei die Biegehilfe beim Biegen des Drahtes über die Schmalseite verhindert, dass der Draht der Verbiegung durch Verdrehen ausweichen kann.

Ein derartiges Verfahren macht es möglich, eine Stator- bzw. Rotorwicklung mit einem Flachdraht raumsparend und kostengünstig anzufertigen.

Im Folgenden soll die Erfindung anhand der Figuren 1 bis 13 näher erläutert werden:
- Figur 1: - zeigt einen Ausschnitt, bei dem ein Formkern mit Wickeldraht umwickelt wird,
- Figur 2: - zeigt eine Drahtauslassdüsenanordnung mit Wickeldrähten und einer zustellbaren Biegehilfe,
- Figur 3: - zeigt schematisch einen Teil eines Statorbzw. Rotorkerns, bei dem eine Wicklung in die Nuten eingelegt ist,
- Figuren 4 bis 10: - zeigen eine Abfolge von Wickelschritten,
- Figur 11: - zeigt die Herstellung eines Wickelkopfes nach dem Stand der Technik,
- Figur 12: - zeigt die Herstellung eines Wickelkopfes nach der Hairpin-Technik,
- Figur 13: - zeigt die Herstellung eines Wickelkopfes nach dem erfindungsgemäßen Verfahren.

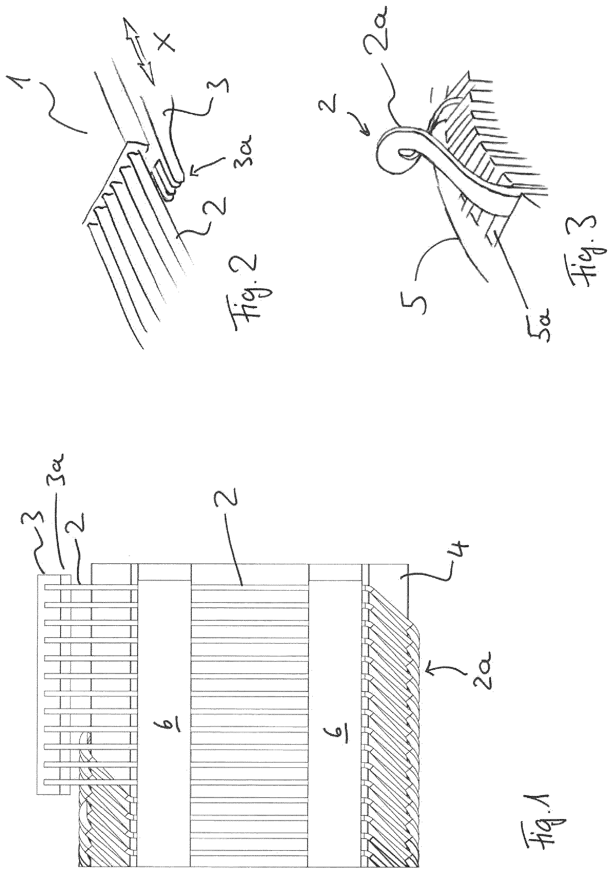

Figur 1 zeigt einen Formkern 4, der gerade bewickelt wird. Die Wickeldrähte 2 werden durch die kammartigen Enden 3a der Biegehilfe 3 geführt und sind auf der flachen Seite des Formkerns 4 abgelegt worden. Gehalten werden die Wickeldrähte 2 auf dem Formkern 4 mittels Drahthalteelementen 6. Bevorzugt sind diese Drahthalteelemente 6 Greifbacken, welche den Wickeldraht 2 erfassen und gegen den Formkern 4 drücken.

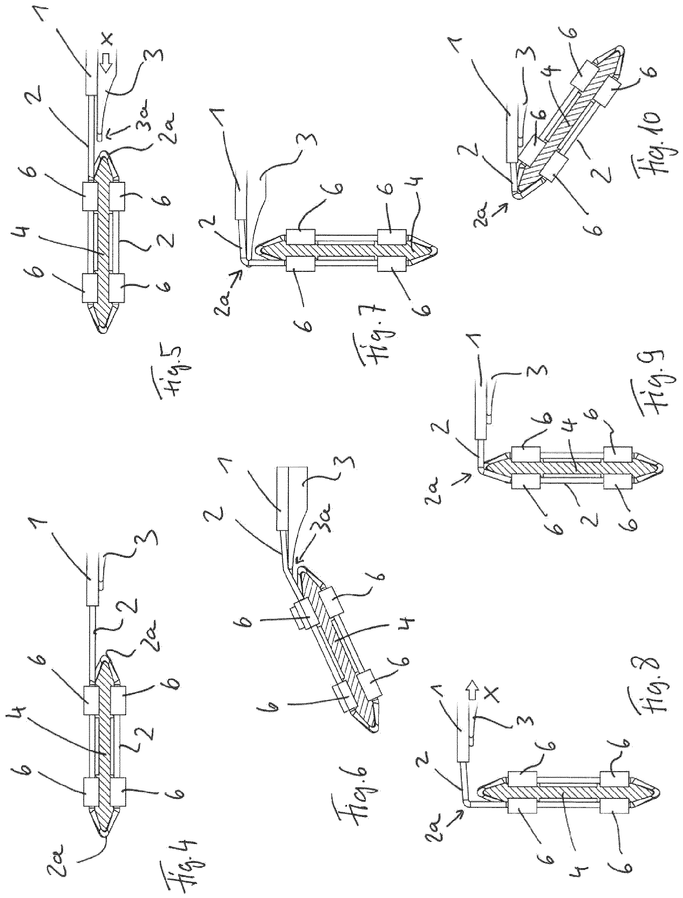

Am unteren Ende des Formkerns 4 sind die gebogenen Abschnitte 2a des Wickeldrahtes gezeigt. Die gezeigte Situation liegt zeitlich kurz vor Beginn der Drehung des Formkerns 4 um die Mittenachse, die in der Zeichenebene liegt. Mit dem Beginn der Drehung werden die Wickeldrähte 2 durch das kammartige Ende 3a der Biegehilfe 3 geführt, um ein Verdrehen des Wickeldrahtes 2 beim Biegen zu verhindern. Anschließend werden die Drahthalteelemente 6 quer zur Wickeldrahtorientierung auf dem Formkern 4 verschoben, um beim Biegen einen vorgegebenen Versatz des Wickeldrahtes 2, eine Schränkung, zu erreichen. Dabei legt sich der Wickeldraht 2 aufgrund der radialen Verkürzung in der Projektion auf dem Schwert ab und der von der Biegehilfe 3 genutzte Bauraum ist nicht mehr vorhanden. Der Wickelvorgang wird anhand der Figuren 4 bis 10 unten näher erläutert.

Figur 2 zeigt eine Drahtauslassdüsenanordnung 1, aus der mehrere Wickeldrähte 2 austreten. Im Bereich der Austrittsdüsen (im gezeigten Beispiel unterhalb derselben) ist die Biegehilfe 3 angeordnet, die sich in X-Richtung relativ zur Drahtauslassdüsenanordnung 1 bewegen lässt. Die Situation zeigt die Biegehilfe 3 mit dem kammartigen Ende 3a in einem teilausgefahrenen Zustand. Die Zwischenräume zwischen den Zinken oder Vorsprüngen des kammartigen Endes 3a sind etwas breiter als die Schmalseite des Wickeldrahtes 2, so dass dieser in die Zwischenräume des Kamms in Hochkantlage eintauchen kann. Gleichzeitig ist der Zwischenraum deutlich schmaler als die Breitseite des flachen Wickeldrahtes 2, so dass die so gestaltete Biegehilfe verhindert, dass sich der Wickeldraht 2 beim Biegen verdreht und so über die Schmalseite ausweichen kann.

Figur 3 zeigt einen Ausschnitt eines Stator- bzw. Rotorkerns 5, bei dem ein aus Flachmaterial bestehender Wickeldraht 2 in die Nuten 5a eingelegt ist. Der Wickeldraht 2 ist in Richtung Schmalseite zu einem Wickelkopf 2a gebogen und trägt deshalb in Richtung Umfang des Stators bzw. Rotors nicht auf. Eine derartige Ausführung erlaubt eine sehr kompakte Bauweise des Stators bzw. Rotors.

Figur 4 zeigt die Ausgangssituation einer Wicklung. Der Formkern 4 weist mit seiner geringsten Dicke nach oben. Die Wickeldrähte 2 sind auf der oberen Seite abgelegt und werden von den Drahthalteelementen 6 gehalten. Die Wickeldrähte 2 kommen aus der Drahtauslassdüsenanordnung 1. Unterhalb (oberhalb wäre auch denkbar) der Drahtauslassdüsenanordnung 1 ist die Biegehilfe 3 angeordnet, die sich in einer Nichtgebrauchsposition unterhalb der Drahtauslassdüsenanordnung 1 befindet. An den linken und rechten Enden des Formkerns 4 sind die Abschnitte 2a des Wickeldrahtes 2 gezeigt, die eine starke Krümmung aufweisen und aus einem vorhergehenden Wickelzyklus stammen.

In Figur 5 ist die Biegehilfe 3 mit dem kammartigen Ende 3a zugestellt worden, indem sie in Pfeilrichtung X aus der Nichtgebrauchsposition bewegt worden ist. In der Figur 6 beginnt sich der Formkern 4 zu drehen, wobei die Wickeldrähte 2 in die kammartigen Enden 3a der Biegehilfe 3 geführt werden. In Figur 7 wurde der Formkern 4 um 90° gedreht, und der Wickeldraht 2 an dem Abschnitt 2a um 90° gebogen, wobei der Wickeldraht 2 an der Stelle durch das kammartige Ende 3a der Biegehilfe 3 geführt und gehalten wird. In dieser Situation steht der Wickeldraht 2 oberhalb der Spitze des Formkerns 4. Dies entspricht der in Figur 1 dargestellten Situation. Anschließend wird, wie die Figur 8 zeigt, die Biegehilfe 3 wieder in die Nichtgebrauchsposition unterhalb der Drahtauslassdüsenanordnung 1 zurückgefahren.

Im nächsten Schritt werden die aufgelegten Wickeldrähte 2 mittels der Drahthalteelemente 6 in die Zeichenebene hineingezogen, wodurch die Wickeldrähte 2 verschränkt und somit die durch Biegen entstandenen Wickelköpfe 2a der Wickeldrähte 2 auf der Schmalseite des Formkerns 4 zu liegen kommen, wie es Figur 9 zeigt. Dadurch entsteht, wie bei einer Schränkung eines vorgefertigten U-Hairpins (vergleiche Figur 12), eine andere, für die Kompaktheit des Wickelkopfes 2a optimierte Form des Drahtsprungs im Wickelkopf.

Abschließend wird, wie Figur 10 zeigt, der Formkern 4 weiter gedreht, bis eine 180°-Drehung beendet ist. Die neu gewickelten Wickeldrähte 2, die oben auf dem Formkern 4 aufliegen, werden von den Drahthalteelementen 6 erfasst und fixiert. Anschließend kann der nächste Wickelzyklus gemäß den Figuren 4 bis 10 wiederholt werden.

Weiterhin wird durch das Hinzustellen der Biegehilfe 3 mit seinem kammartigen Ende 3a gerade beim Biegevorgang verhindert, dass der Wickeldraht 2 beim Biegen der Biegebewegung über die Schmalseite durch Verdrehen ausweicht. Mit einer derartigen Biegehilfe 3 lässt sich ein schmaler Flachdraht 2 sicher über die Schmalseite zu einer Wellenwicklung formen und somit in einen Stator- bzw. Rotorkern 5 kostengünstig und raumsparend einfügen.

In Figur 13 ist noch einmal schematisch der erfindungsgemäße Umformprozess gezeigt. Beim Erstellen einer Wellenwicklung wird mittels der Biegehilfe 3 ein integrierter Vorbiegeprozess und ein anschließender Schränkprozess ausgeführt. Dabei handelt es sich um einen zweistufigen Umformprozess: Der Wickeldraht 2 wird zunächst für die Ablage auf dem Formkern umgebogen (P3) und bei anschließender Ablage auf dem Formkern wird das Schränken (P1, P2) ausgeführt, in dem die beiden geraden Abschnitte des Drahtes in Richtung der Pfeile B1 bzw. PII relativ zueinander auseinandergezogen werden. Auf diese Weise lassen sich auch hier Wickelkopfe 2a herstellen, die sich wie bei der Haipin-Technik (vgl. Figur 12) eher schraubenförmig ausbilden und bei dem mit den Wellenwicklungen hergestellten Produkt sehr kompakt gestaltet werden können. Bei dem hier dargestellten besonderen Fall der Verwendung von hochkant gewickeltem Flachdraht (auch andere Draht-Geometrien sind denkbar) wird durch die Kammform der Biegehilfe zusätzlich ein Auskippen beim Biegen verhindert und ein stabiles, gleichmäßiges Wickelbild erzeugt.

## Patentansprüche

1. Wellenwickelvorrichtung mit einer Drahtauslassdüsenanordnung (1), durch welche ein Wickeldraht (2) oder eine Mehrzahl Wickeldrähte (2) zugeführt wird, und einem relativ zur Drahtauslassdüsenanordnung (1) wenigstens drehbar verlagerbaren Formkern (4), auf welchen der Wickeldraht (2) oder die Wickeldrähte (2) aufwickelbar sind,
**dadurch gekennzeichnet,**
**dass** die Wellenwickelvorrichtung weiter eine dem Wickeldraht (2) zustellbare Biegehilfe (3, 3a) aufweist, die dazu ausgelegt ist, einen Abschnitt (2a) eines aus der Drahtauslassdüsenanordnung (1) zugeführten Wickeldrahtes (2) vor der Ablage des Abschnitts (2a) auf dem Formkern (4) umzubiegen.

2. Wellenwickelvorrichtung nach Anspruch 1,
**dadurch gekennzeichnet,**
**dass** die Biegehilfe (3) eine kammartige Form aufweist.

3. Wellenwickelvorrichtung nach Anspruch 2,
**dadurch gekennzeichnet,**
**dass** der Wickeldraht (2) ein Flachdraht ist und die kammartige Form der Biegehilfe (3) Zwischenräume aufweist, deren Breite so bemessen ist, dass sie größer als die Schmalseiten des Flachdrahtes (2) aber kleiner als die Breitseite des Flachdrahtes (2) ist.

4. Wellenwickelvorrichtung nach einem der vorigen Ansprüche,
**dadurch gekennzeichnet,**
**dass** die Biegehilfe (3, 3a) in einer Richtung parallel zur Zuführrichtung des Wickeldrahtes (2) zustellbar ist.

5. Verfahren zum Herstellen einer Wellenwicklung, bei welchem ein Wickeldraht (2) oder eine Mehrzahl Wickeldrähte (2) von einer Drahtauslassdüsenanordnung (1) einem Formkern (4) zugeführt und durch Drehen des Formkerns (4) auf diesen aufgewickelt werden, wobei
i) der zugeführte Wickeldraht (2) auf dem Formkern (4) abgelegt und an diesem festgehalten wird;
ii) der Formkern (4) dann um 180° gedreht wird;
**dadurch gekennzeichnet,**
**dass** zwischen dem Schritt i) und dem Schritt ii) in einem Schritt ia) eine Biegehilfe (3) dem zugeführten Wickeldraht (2) zugestellt wird, so dass der Wickeldraht (2) durch die Biegehilfe (3) gehalten wird.

6. Verfahren nach Anspruch 5,
**dadurch gekennzeichnet,**
**dass** als Wickeldraht (2) ein Flachdraht verwendet wird, welcher durch die Biegehilfe (3) in einer Hochkantposition gehalten wird.

7. Verfahren nach Anspruch 5 oder 6,
**dadurch gekennzeichnet,**
**dass** während des Schritts ii), insbesondere etwa nach einer 90°-Drehung des Formkerns (4), in einem Schritt iia) die Biegehilfe (3) aus dem Eingriff mit dem Wickeldraht (2) zurückgezogen wird.

8. Verfahren nach einem der Ansprüche 6 bis 7,
**dadurch gekennzeichnet,**
**dass** die Schritte i) und ii), insbesondere i), ia), ii), iia) wiederholt ausgeführt werden.
